# EUROPEAN PATENT APPLICATION

(11) **EP 4 841 323 A1**
(43) Date of publication of application: **18.11.2026**
(21) Application number: 26178856.6
(22) Date of filing: 15.05.2026
(51) Int. Cl.: G02B 6/44, G02B 6/38, G02F 1/13, H02G 3/08

(54) **DEDICATED ENCLOSURE FOR OPTICAL POWER COMPOSITE (OPC) CABLE**

(30) Priority: 16.05.2025 KR 20250064222
(71) Applicant: Glotech Co., Ltd, Gimhae-si, Gyeongsangnam-do 50850 (KR)
(72) Inventor: KIM, Sung U, 11472 Yangju-si (KR); KIM, Yeoul Ho, 05626 Seoul (KR); CHOI, Chang Ho, 12044 Namyangju-si (KR)
(74) Representative: van Trier, Norbertus Henricus Gerardus

(57) **Abstract**

A dedicated enclosure for an optical power composite cable is disclosed. The dedicated enclosure includes: an enclosure body assembly; a circuit breaker part provided in the enclosure body assembly to block an external power supply; a relay and terminal block part provided in the enclosure body assembly and including a signal relay and a terminal block; a power socket part provided in the enclosure body assembly and including a power socket for maintenance; a power distribution part provided in the enclosure body assembly to distribute power from the circuit breaker part to power demand sources; a ground terminal block part provided in the enclosure body assembly and including a plurality of ground terminals and a busbar; an optical cable connection part provided in the enclosure body assembly to connect and arrange optical cables; and a busbar part provided in the enclosure body assembly to provide a power supply and a grounding connection.

## Description

### CROSS-REFERENCE TO RELATED APPLICATION

This application claims priority to and the benefit of Korean Patent Application No. 10-2025-0064222, filed on May, 16, 2025, the disclosure of which is incorporated herein by reference in its entirety.

### BACKGROUND

### Field

The present disclosure relates to optical communication facilities and power supply facilities, and more particularly, to a dedicated enclosure for an optical power composite (OPC) cable-, the enclosure integrating an optical cable connection part, network equipment, a power circuit breaker, a ground terminal block, and the like, to facilitate volume reduction, installation convenience, and improved grounding performance.

### Discussion of Related Art

With the widespread distribution of high-speed communication networks and the rapid surge in data traffic, it is required to stably establish data transmission/reception systems using optical cables and power supply facilities interworking therewith at various installation sites such as communication offices, relay stations, communication rooms in buildings, and power facility rooms.

To this end, the power cables and the optical cables are typically installed and operated separately. An optical connection part has a structure for connection and distribution of optical cables, and for arrangement and protection of spare optical cables, and a power supply part serves to supply and protect power by installing a circuit breaker, a relay, a terminal block, a ground terminal, a busbar for power distribution, and the like.

However, such a separate facility arrangement has several problems.

First, since an optical connection enclosure and a power enclosure are separately installed, twice the installation space is required, and there is a problem in that installation time increases due to complicated field construction and wiring work, thereby leading to an increase in construction costs.

Second, due to the absence of a dedicated enclosure for optical power composite cables, when installed in a conventional enclosure structure, wiring of power supply lines and optical cables is exposed, thereby reducing safety and increasing construction difficulty, and since operators are required to individually inspect and manipulate multiple wires during maintenance, work efficiency is reduced, and there remains a possibility of physical interference between power cables and optical cables.

Third, due to the characteristics of communication cables, additional installations are required in densely populated areas or regions where data communication increases. Additionally, since auxiliary power sockets that can be used for emergency purposes by maintenance operators in the field are often not separately provided, there is inconvenience in carrying separate portable power supply devices or drawing temporary power from nearby facilities.

Fourth, most enclosures used in domestic subways, railways, and road tunnels have insufficient protection functions against external impact, vibration, or fire, posing risks of facility damage, communication network failure, and fire spread. Measures to provide shock-absorbing structures or fire-resistance performance to prevent these issues have not been sufficiently reflected.

In particular, although technologies for maximizing field wiring efficiency and space-saving effects by combining power supply lines and optical cables into a single optical power composite cable have been recently introduced, an integrated enclosure structure that simultaneously accommodates a busbar part for power supply and grounding connections and an optical cable connection part has not been proposed previously.

Accordingly, there is a very high technical demand for a new structure of a dedicated enclosure for an optical power composite cable that can effectively separate power supply cables and optical cables of the optical power composite cable while integrating the same into a single enclosure, improve stability, maintainability, and construction efficiency, and ensure impact and fire response performance.

The aforementioned technical configuration is background art provided for facilitating understanding of the present disclosure, and does not mean a prior art widely known in the technical field to which the present disclosure pertains.

(Patent Document 1) Korean Registered Patent Publication No. 10-2595486 (October 25, 2023).

### SUMMARY

The present disclosure has been made to solve the above-described problems of the prior art, and an object thereof is to provide a dedicated enclosure for an optical power composite cable, which: (1) integrates a power supply and an optical cable of the optical power composite cable into a single integrated enclosure to reduce an installation space volume, facilitates wiring arrangement through the design of a hinge-type optical extra-length plate structure, and protects the power cables and optical cables; (2) enhances the efficiency of installation processes and the convenience of maintenance by integrally installing a circuit breaker part, a relay and terminal block part, a power socket part, a power distribution part, a ground terminal block part, an optical cable connection part, and a busbar part; (3) ensures the stability and reliability of facilities by applying an enclosure pad capable of absorbing external impacts and a fire-resistant coating part for responding to fires; (4) improves the stability and constructability of optical cable connections by including an elastic pad for impact reduction, a cable holder part, and a connection part fastening structure in the optical cable connection part; and (5) ensures the fastening reliability of power and grounding lines (double grounding) through a clamping structure of a busbar part for power supply and grounding connection (blade grounding structure) of the optical power composite cable.

According to one aspect of the present disclosure, a dedicated enclosure for an optical power composite cable may be provided, comprising: an enclosure body assembly; a circuit breaker part provided in the enclosure body assembly and configured to block an external power supply; a relay and terminal block part provided in the enclosure body assembly and including a signal relay and a terminal block; a power socket part provided in the enclosure body assembly and including a power socket for maintenance; a power distribution part provided in the enclosure body assembly and configured to distribute power from the circuit breaker part to power demand sources; a ground terminal block part provided in the enclosure body assembly and including a plurality of ground terminals and a busbar; an optical cable connection part provided in the enclosure body assembly and configured to connect and arrange optical cables; and a busbar part provided in the enclosure body assembly and configured to provide a power supply and a grounding connection.

The enclosure body assembly may include an enclosure body, an enclosure cover coupled to the enclosure body to be opened and closed, and an enclosure pad coupled to a bottom portion of the enclosure body and configured to mitigate an impact transmitted to the enclosure body.

The enclosure body assembly may further include a fire-resistant coating part provided on at least one of the enclosure body and the enclosure cover and configured to reduce a thermal reaction in the event of a fire.

The optical cable connection part may include: a connection part body coupled to an inner bottom portion of the enclosure body assembly; a label provided on the connection part body; a fastening flange provided on a bottom portion of the connection part body; a connection part fastening member configured to detachably couple the fastening flange to the enclosure body assembly; an elastic pad coupled to the connection part body and configured to reduce an impact transmitted to the connection part body; and a hinge part configured to couple a body cover of the connection part body to a side wall of the connection part body to be opened and closed.

The optical cable connection part may further include a cable holder part coupled to the connection part body and configured to support an optical cable, wherein the cable holder part may include a holder flange detachably coupled to the connection part body; and a plurality of holder protrusions spaced apart from each other on the holder flange and configured to allow the optical cable to be coupled in an interference-fit manner.

The busbar part may include a busbar base provided on an inner bottom portion of the enclosure body assembly and a plurality of holder clamps coupled to the busbar base and configured to clamp an optical composite cable, wherein the busbar part is provided with double grounding.
(1) The dedicated enclosure for an optical power composite cable according to the present disclosure may be implemented in a structure in which an optical cable connection part and a power supply facility are integrated, thereby reducing installation space, facilitating arrangement of cable wiring, and significantly improving constructability and maintainability.
(2) The dedicated enclosure may integrate a circuit breaker part, a relay and terminal block part, a power socket part, a power distribution part, a ground terminal block part, a hinge structure and an opening/closing system of the optical cable connection part, and a busbar part into a single enclosure, thereby reducing volume and simplifying the installation process, shortening the construction period, and achieving cost savings.
(3) The dedicated enclosure may include an enclosure pad and a fire-resistant coating part in the enclosure body assembly, thereby protecting the facility in the event of an external impact or a fire and improving facility stability.
(4) The dedicated enclosure may include an elastic pad for impact reduction, a detachable optical extra-length plate holder, a fastening flange, and a hinge part in the optical cable connection part, thereby improving the connection stability and construction convenience of the optical cable, and enhancing work efficiency during maintenance.
(5) The dedicated enclosure may include a clamping structure in a busbar part for power supply and grounding connection, thereby ensuring the fastening reliability of power and grounding lines and improving the workability of onsite installation and maintenance.

### BRIEF DESCRIPTION OF THE DRAWINGS

The above and other objects, features, and advantages of the present disclosure will become more apparent to those of ordinary skill in the art from the following detailed description of exemplary embodiments thereof with reference to the attached drawings, in which:
FIG. 1 is a perspective view schematically illustrating a dedicated enclosure for an optical power composite cable according to a first embodiment of the present disclosure;
FIG. 2 is an enlarged view illustrating a region of a busbar part shown in FIG. 1;
FIG. 3 is a view illustrating that one side of a connection part body shown in FIG. 1 is separated from the enclosure body;
FIG. 4 is a view illustrating that an optical cable is held by a cable holder part coupled to the connection part body shown in FIG. 3;
FIG. 5 is a view illustrating that double grounding is provided in the busbar part of the present embodiment;
FIG. 6 is a perspective view schematically illustrating a dedicated enclosure for an optical power composite cable according to a second embodiment of the present disclosure; and
FIG. 7 is a perspective view schematically illustrating a dedicated enclosure for an optical power composite cable according to a third embodiment of the present disclosure.

### DETAILED DESCRIPTION OF EXEMPLARY EMBODIMENTS

For a more complete understanding of the present disclosure, the operational advantages of the present disclosure, and the objects achieved by the practice of the present disclosure, reference should be made to the accompanying drawings illustrating preferred embodiments of the present disclosure and the descriptions thereof.

Hereinafter, the present disclosure will be described in detail by describing preferred embodiments of the present disclosure with reference to the accompanying drawings. The same reference numerals presented in each drawing indicate the same elements.

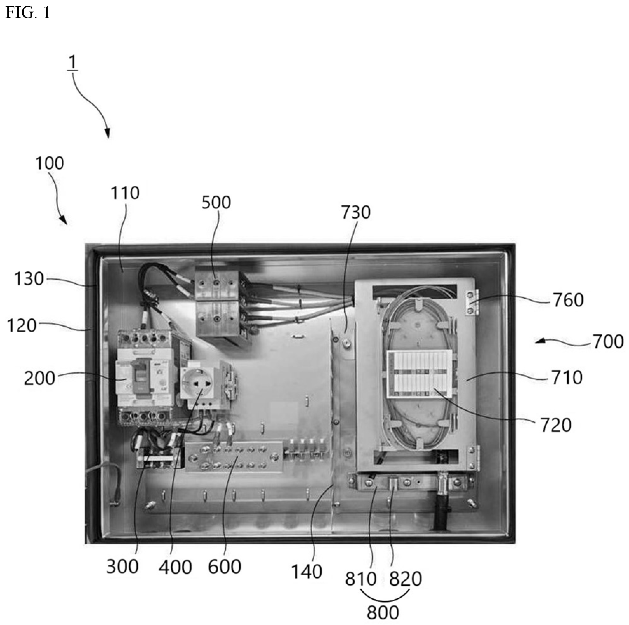

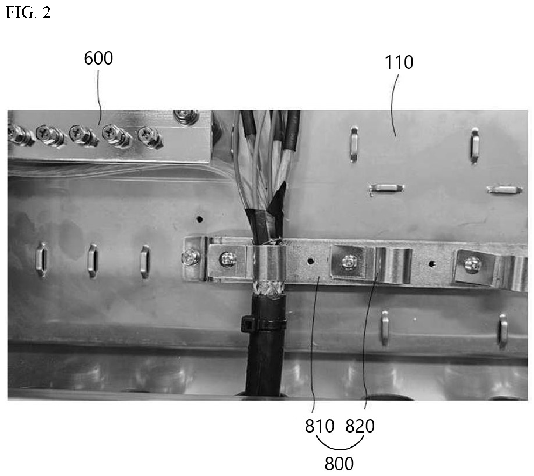

FIG. 1 is a perspective view schematically illustrating a dedicated enclosure for an optical power composite cable according to an embodiment of the present disclosure, and FIG. 2 is an enlarged view illustrating a region of a busbar part shown in FIG. 1.

As shown in these drawings, a dedicated enclosure for an optical power composite cable according to the present embodiment includes an enclosure body assembly 100, a circuit breaker part 200 provided in the enclosure body assembly 100 and configured to block an external power supply, a relay and terminal block part 300 provided in the enclosure body assembly 100 and including a signal relay and a terminal block, a power socket part 400 provided in the enclosure body assembly 100 and including a power socket for maintenance, a power distribution part 500 provided in the enclosure body assembly 100 and configured to distribute power from the circuit breaker part 200 to power demand sources, a ground terminal block part 600 provided in the enclosure body assembly 100 and including a plurality of ground terminals and a busbar, an optical cable connection part 700 provided in the enclosure body assembly 100 and configured to connect and arrange optical cables, and a busbar part 800 provided in the enclosure body assembly 100 and configured to provide a power supply and a grounding connection.

The enclosure body assembly 100 is a structure configured to protect internal components from electrical, mechanical, and environmental factors originating from the outside and to allow for the efficient arrangement and maintenance of power and optical communication facilities. The enclosure body assembly 100 includes an enclosure body 110 and an enclosure cover 120 coupled to an upper portion thereof to be opened and closed.

The enclosure body 110 is formed of a metal or a flame-retardant synthetic resin material, and a predetermined installation space is provided therein to allow various electrical components, the optical cable connection part 700, the busbar part 800, and the like to be installed. The enclosure cover 120 has a structure for covering an opening of the enclosure body 110, is pivotally coupled to a rear portion of the enclosure body 110 through a hinge part 760, and allows for the inspection and replacement of internal components by opening the enclosure cover 120 during maintenance.

A packing member 130 is provided on a contact surface of the enclosure cover 120 to secure airtightness so as to allow the stable protection of internal components by blocking the inflow of dust, moisture, foreign substances, and the like from the outside when coupled with the enclosure body 110.

Inside the enclosure body assembly 100, a circuit breaker part 200, the relay and terminal block part 300, a power socket part 400, a power distribution part 500, the ground terminal block part 600, an optical cable connection part 700, and a busbar part 800 are provided in a predetermined arrangement and are configured to functionally interoperate with each other.

A cable arrangement duct 140 is provided in the enclosure body assembly 100 to allow cables and the like to be conveniently arranged. In the present embodiment, a plurality of holes are spaced apart from each other in the cable arrangement duct 140, and the cable arrangement duct 140 may have an L-shape.

The circuit breaker part 200 serves to control the power supply in an electric circuit and is a device configured to open and close a power supply introduced from the outside. The circuit breaker part 200 mainly performs a function of detecting an overload or an abnormal current and immediately blocking power when the overload or the abnormal current occurs. Through this, the stability of an electric device or system is ensured, and an electrical accident or damage may be prevented.

The overload refers to a situation in which a current flowing in an electric circuit exceeds an allowable capacity, and the abnormal current indicates a state in which a current abnormally increases. The circuit breaker part 200 has a built-in sensor or circuit for detecting such an overload or an abnormal current, and is configured to protect the system by immediately blocking power when the current exceeds a predetermined reference.

The relay and terminal block part 300 is an important component responsible for branching and connecting electrical signals and power. This component performs two main functions: first, it is provided with a signal relay and a power terminal block and serves to branch or connect multi-channel signals and power signals, respectively. That is, it may control the operation of the system through various signal paths and power paths, and may distribute or block the flow of signals or power as needed, thereby supporting the efficient and safe operation of the system.

The power socket part 400 plays an important role in maintenance and inspection. This socket part is provided with a power socket for maintenance and provides a function of supplying temporary power during system inspection or emergency situations. For example, it helps to smoothly proceed with system inspection and repair work by providing temporary power when the power supply is cut off, and in an emergency, it allows the system to be stably maintained by connecting power for maintenance from the outside.

Such a structure is provided with an important function designed to cope with emergency situations even when the system does not operate normally, thereby significantly improving the reliability and stability of the overall system.

The power distribution part 500 is a component that performs a function of efficiently distributing power introduced from the circuit breaker part 200 to a plurality of power demand sources, and plays an important role in the power management of the entire system. The power distribution part 500 is configured in a structure for supplying electricity introduced from a power supply source to a plurality of power demand sources, thereby ensuring that various components within the system may receive power stably at the same time.

Main components and an operation method of the power distribution part 500 are as follows. A power input unit is an input unit through which power introduced from the circuit breaker part 200 is transmitted to the power distribution part 500, and the input power is supplied into the power distribution part while maintaining a constant voltage and current state.

A power distribution circuit is built into the power distribution part 500 and is configured to distribute power suitably for the plurality of power demand sources. This circuit performs a function of distributing the input power and distributes the power according to the required voltage and current of each power demand source.

A power output unit of the power distribution part 500 supplies power to each demand source through an output unit connected to the plurality of power demand sources. This output unit is designed to maintain a voltage and a current suitable for each demand source.

An overcurrent protection circuit is built into the power distribution part 500 to prevent an overcurrent condition. When an overcurrent is detected, the power supply is automatically cut off or limited to protect the system.

A power state monitoring and control unit of the power distribution part 500 may include a function for monitoring a power state. Through this, the power supply state may be checked in real time, and when an abnormality occurs, a warning may be issued or a response may be automatically initiated.

The power distribution part 500 stably distributes power introduced from the circuit breaker part 200 to the plurality of power demand sources, thereby ensuring that each demand source may receive a stable power supply. In addition, it enhances system safety through an overcurrent protection function, and allows the power state to be checked and controlled in real time through a power monitoring function, thereby providing the effect of increasing the reliability and efficiency of the system.

The ground terminal block part 600 stably maintains the grounding of the system through a plurality of ground terminals and a busbar, and provides for the safety of a user and protection of the system.

In the present embodiment, the ground terminal block part 600 may include a plurality of ground terminals and a busbar.

The ground terminals are points providing a grounding connection to each part of the system. Generally, the ground terminals are made of a metal material and have high conductivity, thereby allowing electricity to flow to the ground quickly and safely. Various electrical components, equipment, and devices of the system are connected to these ground terminals, thereby serving to prevent electrical instability or overvoltage that may occur within the system.

The busbar is a conductive material connecting several ground terminals and is mainly made of copper or aluminum. The busbar plays an important role in a ground circuit and performs a function of collecting a plurality of ground terminals into one. The busbar connected in this manner helps to maintain a consistently stable ground state in response to a change in voltage or current of the system. The busbar is often designed to handle a large current and effectively distributes a current generated from each ground terminal.

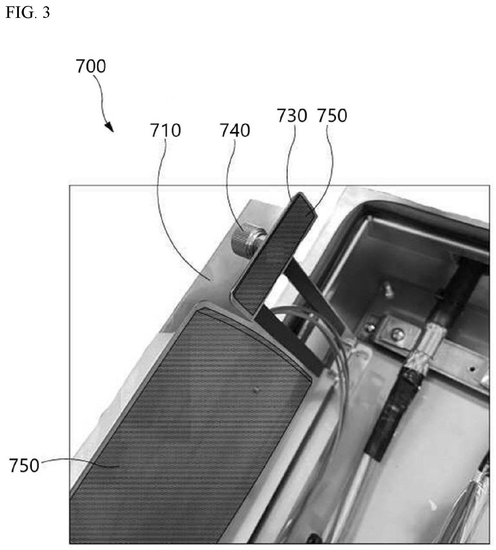

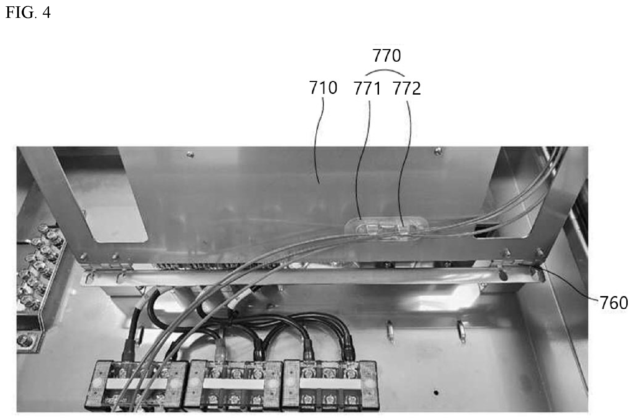

As shown in FIGS. 3 and 4, the optical cable connection part 700 includes a connection part body 710, a label 720, a fastening flange 730, a connection part fastening member 740, an elastic pad 750, a hinge part 760, and a cable holder part 770. In the present embodiment, the optical cable connection part 700 may be applied to an optical extra-length plate body.

The connection part body 710 is installed on an inner bottom portion of the enclosure body 110, and the fastening flange 730 is provided on a lower portion thereof, thereby allowing for fixation and detachment by the connection part fastening member 740. The label 720 displays cable connection information, and the elastic pad 750 absorbs an external impact, thereby reducing transmission thereof to the connection part body 710. In the present embodiment, the elastic pad 750 is coupled to a bottom portion of the fastening flange 730 and is configured to reduce an impact transmitted to the fastening flange 730, as shown in FIG. 3.

In addition, the cable holder part 770 is detachably coupled to the connection part body 710 and includes a holder flange 771 and holder protrusions 772 to allow a plurality of optical cables to be easily fixed. The holder protrusions 772 are configured to fix the cables in an interference-fit manner, thereby preventing dislodgement due to vibration and external force.

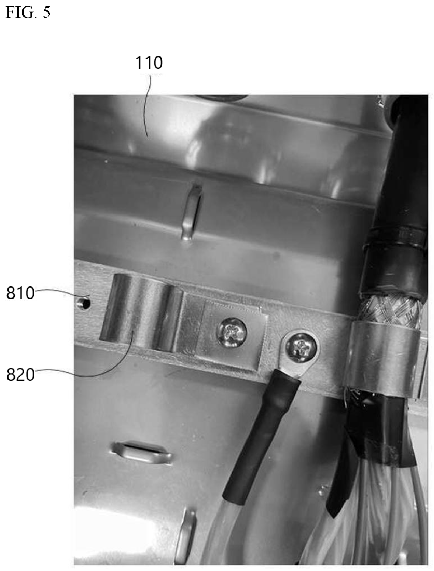

As shown in FIGS. 2 and 5, the busbar part 800 includes a busbar base 810 and a plurality of holder clamps 820, wherein an optical composite cable is installed on the busbar base 810, and the holder clamps 820 clamp and fix the same. In particular, in the present embodiment, a double grounding configuration is provided, thereby improving grounding stability.

In the present embodiment, the busbar part 800 may be used exclusively for a blade grounding part of the optical power composite cable.

Additionally, the cable arrangement duct 140 is provided to facilitate the wiring arrangement and protection within the enclosure, and is designed to allow for arrangement without interference between the optical cable connection part 700 and the busbar part 800.

In addition, according to another embodiment of the present disclosure, the enclosure body assembly 100 may be provided with a fire-resistant coating part on a surface of the enclosure body 110 and/or the enclosure cover 120 in order to ensure thermal resistance in the event of a fire. Through this, a thermal reaction is delayed in the event of a fire, thereby ensuring the safety of electrical facilities.

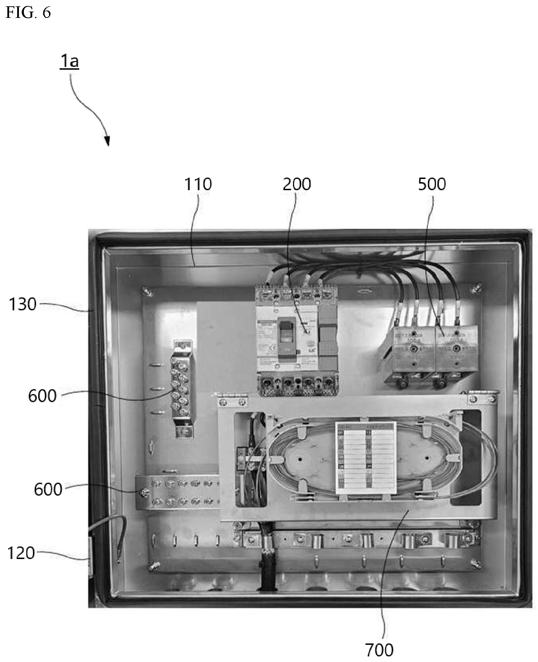

FIG. 6 is a perspective view schematically illustrating a dedicated enclosure for an optical power composite cable according to a second embodiment of the present disclosure.

The dedicated enclosure 1a for an optical power composite cable according to the present embodiment may have a different arrangement of main components, as shown in FIG. 6.

In the present embodiment, the power socket part 400 may be omitted.

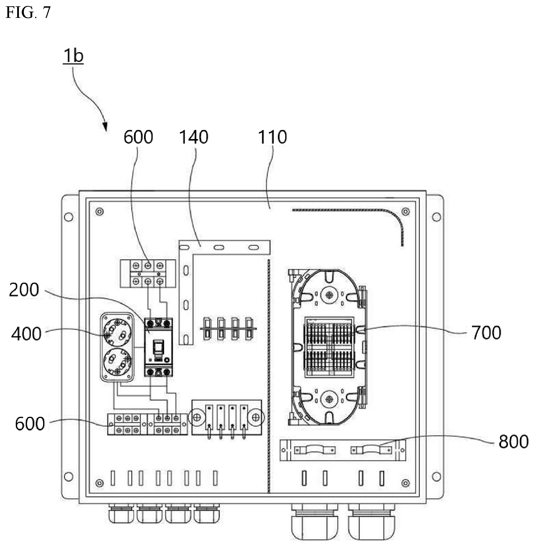

FIG. 7 is a perspective view schematically illustrating a dedicated enclosure for an optical power composite cable according to a third embodiment of the present disclosure.

The dedicated enclosure 1b for an optical power composite cable according to the present embodiment is provided as a single-phase enclosure, as shown in FIG. 7, thereby providing the advantage of simplifying the structure.

As described above, the dedicated enclosure for an optical power composite cable according to the present disclosure may integrally arrange an optical cable connection part and a power supply part within a single enclosure, thereby minimizing the installation area, improving field maintenance efficiency, and providing functions such as shock absorption, thermal resistance, double grounding, and cable arrangement to prevent failures and accidents from occurring.

As described above, the present disclosure is not limited to the described embodiments, and it will be apparent to those of ordinary skill in the art that various modifications and variations may be made without departing from the spirit and scope of the present disclosure. Therefore, such modifications or variations are intended to fall within the scope of the claims of the present disclosure.

**[List of Reference Numbers]**

| | | | |
|---|---|---|---|
| 1, 1a, 1b: | Dedicated enclosure for optical power composite cable | | |
| 100: | Enclosure body assembly | 110: | Enclosure body |
| 120: | Enclosure cover | 130: | Packing member |
| 140: | Cable arrangement duct breaker part | 200: | Circuit |
| 300: | Relay and terminal block part part | 400: | Power socket |
| 500: | Power distribution part terminal block part | 600: | Ground |
| 700: | Optical cable connection part part body | 710: | Connection |
| 720: | Label | 730: | Fastening flange |
| 740: | Connection part fastening member pad | 750: | Elastic |
| 760: | Hinge part | 770: | Cable holder part |
| 771: | Holder flange | 772: | Holder protrusion |
| 800: | Busbar part | 810: | Busbar base |
| 820: | Holder clamp | | |

## Claims

1. A dedicated enclosure for an optical power composite cable, comprising:
an enclosure body assembly;
a circuit breaker part provided in the enclosure body assembly and configured to block an external power supply;
a relay and terminal block part provided in the enclosure body assembly and including a signal relay and a terminal block;
a power socket part provided in the enclosure body assembly and including a power socket for maintenance;
a power distribution part provided in the enclosure body assembly and configured to distribute power from the circuit breaker part to power demand sources;
a ground terminal block part provided in the enclosure body assembly and including a plurality of ground terminals and a busbar;
an optical cable connection part provided in the enclosure body assembly and configured to connect and arrange optical cables; and
a busbar part provided in the enclosure body assembly and configured to provide a power supply and a grounding connection.

2. The dedicated enclosure of claim 1, wherein the enclosure body assembly includes:
an enclosure body;
an enclosure cover coupled to the enclosure body to be opened and closed; and
an enclosure pad coupled to a bottom portion of the enclosure body and configured to mitigate an impact transmitted to the enclosure body.

3. The dedicated enclosure of claim 2, wherein the enclosure body assembly further includes a fire-resistant coating part provided on at least one of the enclosure body and the enclosure cover and configured to reduce a thermal reaction in the event of a fire.

4. The dedicated enclosure of claim 1, wherein the optical cable connection part includes:
a connection part body coupled to an inner bottom portion of the enclosure body assembly;
a label provided on the connection part body;
a fastening flange provided on a bottom portion of the connection part body;
a connection part fastening member configured to detachably couple the fastening flange to the enclosure body assembly;
an elastic pad coupled to the connection part body and configured to reduce an impact transmitted to the connection part body; and
a hinge part configured to couple a body cover of the connection part body to a side wall of the connection part body to be opened and closed.

5. The dedicated enclosure of claim 4, wherein the optical cable connection part further includes a cable holder part coupled to the connection part body and configured to support an optical cable, and
the cable holder part includes:
a holder flange detachably coupled to the connection part body; and
a plurality of holder protrusions spaced apart from each other on the holder flange and configured to allow the optical cable to be coupled in an interference-fit manner.

6. The dedicated enclosure of claim 1, wherein the busbar part includes:
a busbar base provided on an inner bottom portion of the enclosure body assembly; and
a plurality of holder clamps coupled to the busbar base and configured to clamp an optical composite cable, wherein the busbar part is provided with double grounding.
